# EUROPÄISCHE PATENTSCHRIFT

(11) **EP 3 661 714 B1**
(45) Veröffentlichungstag und Bekanntmachung des Hinweises auf die Patenterteilung: **01.12.2021**
(21) Anmeldenummer: 18759236.5
(22) Anmeldetag: 01.08.2018
(51) Int. Cl.: B29C 31/04, B29C 45/18, B29C 31/06

(54) **EINRICHTUNG ZUR EINKORNZUFÜHRUNG AN EINE VERARBEITUNGSMASCHINE, INSBESONDERE SPRITZGUSSMASCHINE**
APPARATUS FOR FEEDING SINGLE GRAINS TO A PROCESSING MACHINE, IN PARTICULAR AN INJECTION MOLDING MACHINE
DISPOSITIF POUR L'ACHEMINEMENT GRAIN PAR GRAIN SUR UNE MACHINE DE TRAITEMENT, EN PARTICULIER UNE MACHINE DE MOULAGE PAR INJECTION

(30) Priorität: 03.08.2017 AT 506472017
(43) Veröffentlichungstag der Anmeldung: 10.06.2020
(73) Patentinhaber: Wittmann Technology GmbH, 1220 Wien (AT)
(72) Erfinder: FUX, Erhard, 3451 Michelhausen (AT)
(74) Vertreter: Felfernig, Oliver
(86) Internationale Anmeldenummer: PCT/AT2018/060172
(87) Internationale Veröffentlichungsnummer: WO 2019/023730

(56) Entgegenhaltungen:
- JP-A- H 068 242
- JP-A- H06 190 831

## Beschreibung

Die Erfindung betrifft eine Einrichtung zur Einkornzuführung an eine Verarbeitungsmaschine, insbesondere Spritzgussmaschine, wie sie im Anspruch 1 beschrieben ist.

Es sind bereits Verfahren zur Bereitstellung von Schüttgut bekannt, bei denen beispielsweise das Kunststoff-Granulat durch die Fördereinrichtung vor der Dosierung in Behältern bereitgestellt wird.

Dabei ist aus der JPH06190831A ein Vereinzelungssystem für Granulat bekannt, bei dem zur Aufnahme des Korns eine Vereinzelungsscheibe angeordnet ist. Das Korn wird dabei über Ansaugöffnungen mittels Unterdruck von einem Kornspeicher, durch den die Vereinzelungsscheibe gedreht wird, aufgenommen. Mittels Überdruck wird das aufgenommene Korn von der Vereinzelungsscheibe in eine zugeordnete Versorgungsleitung geblasen.

Nachteilig ist hierbei, dass bei einem derartigen Aufbau nicht gewährleistet werden kann, dass immer nur ein Korn pro Ansaugöffnung gefördert wird.

Aus der DE 195 28 636 A1 ist eine Einrichtung zum Fördern und Dosieren von Schüttgut bekannt, bei dem das Dosiergerät gleichzeitig als Fördergerät dient.

Weiters ist aus der US 2008/049546 A1 eine Fördereinrichtung bekannt, die mehrere Behälter aufweist.

Darüber hinaus ist aus der DE 696 27 717 T2 ein Verfahren und ein gravimetrischer Mischer zum Abgeben von abgemessenen Mengen von granularen Materialien und Farbmitteln, insbesondere Pigmente in flüssiger Form, bekannt.

Weiters ist aus der JP H06 8242 A eine Zerkleinerung bzw. Schleifverfahren für Gummi handelt, welches für eine Reservoir ein Art Rührwerk einsetzt.

Wie eingangs schon aufgezeigt, werden verschiedene Mengen von verschiedenen Kunststoff-Granulaten nach frei einstellbaren Rezepten in Batches abgefüllt und jede einzelne Art eines Kunststoff-Granulates, wie beispielsweise Neuware, Masterbatch, Additive und/oder Mahlgut, wird aus einem Materialtrichter über ein Materialventil nacheinander oder auch parallel in einen Wiegebehälter oder Mischbehälter, je nach System, abgelassen.

In vorwiegenden Fällen soll mit der Einrichtung bzw. Dosiervorrichtung das Kunststoff-Granulat in Form von Schüttgut vereinzelt werden, d.h., das z.B. bei einem Masterbatch Korn für Korn dem Verarbeitungsprozess zugeführt wird.

Aufgabe der Erfindung ist es daher eine Einrichtung der eingangs genannten Art zu schaffen, mit der einerseits eine Einkornförderung und anderseits auch eine hohe Dosiergenauigkeit mit kleinstmöglichen Abweichungen möglich sind.

Die Aufgabe wird durch die Erfindung gelöst.

Die erfindungsgemäße Einrichtung ist dadurch gekennzeichnet, dass ein Kornabstreifer und/oder ein Kornausrichter für das Schüttgut bzw. Korn zum Abstreifen der Körner und/oder Ausrichten der Körner angeordnet ist oder an der Vereinzelungsscheibe für die Schüttgutaufnahme oder an der Welle ein Rühr- bzw. Mitnehmerelement angeordnet ist..

Vorteilhaft ist hierbei, dass durch die Anordnung eines Kornabstreifers und/oder eines Kornausrichters es möglich ist, dass vor der Abgabe bzw. nach der Abfuhr des vereinzelten Korns sichergestellt wird, dass allfällig verhakte Pellets oder Körner über die Abstreifelemente und/oder Ausrichtelemente abgestreift werden, sodass immer nur ein einzelnes Korn, an die Abblassdüse gelangt. Auch wird erreicht, dass bei spezieller Korngeometrie eine entsprechende Ausrichtung erfolgt, sodass eine sichere Abnahme und Weitertransport zur Spritzgussmaschine erfolgen kann. Damit eine Einzelkornzuführung gewährleistet ist, ist es auch möglich, dass an der Vereinzelungsscheibe für die Schüttgutaufnahme oder an der Welle ein Rühr- bzw. Mitnehmerelement angeordnet ist. Dadurch wird erreicht, dass durch das Rühr- bzw. Mitnehmerelement das Schüttgut durchmischt und in Richtung der Ansaugbohrungen bewegt werden, um eine Brückenbildung im Kornaufnahmebereich und Reservoir zu unterbinden, sodass eine sicheres Ansaugen über die Ansaugöffnungen gewährleistet ist.
bei einem derartigen Aufbau ein sicherer Vereinzelungsprozess durchgeführt werden kann, da an jeder Ansaugöffnung nur ein Schüttgut, insbesondere Pellet oder Korn, angesaugt wird. Vorzugsweise ist hierzu der Durchmesser der Ansaugöffnung an die Schüttgutgröße angepasst, d.h., dass bei unterschiedlich großen Korn unterschiedliche Vereinzelungsscheiben mit entsprechenden Ansaugbohrungen zum Einsatz kommen, sodass bei einer Änderung des Schüttgutes auch gleichzeitig die Vereinzelungsscheibe geändert wird. Ein weiterer Vorteil liegt darin, dass durch das Durchlaufen des Granulatreservoir von der Vereinzelungsscheibe sichergestellt wird, dass immer ein Korn aufgenommen wird, da eine längere Phase des Durchlaufens des Granulatreservoir, also des Kontaktes mit dem Körner, vorhanden ist und nicht in einem kleinen Bereich, insbesondere punktuell, eine Zuführung erfolgt. Von Vorteil ist weiters, dass eine präzise Dosierung durch die Vereinzelungsscheiben für den Spritzgussprozess einer Spritzgussmaschine möglich ist. Hierzu liefert beispielsweise die Spritzgussmaschine eine Freigabe für die Dosierung, sodass alles Weitere von der Dosiergeräte-steuerung der Einrichtung, also dem Einkorn-Dosiergerät, geregelt wird. Es ist jedoch möglich, dass sämtliche Geräte über eine Bus-Steuerung verbunden sind, über die die Freigabe und mögliche Parametrierungen von der Spritzgussmaschine aus vorgegeben werden.

Es ist eine Ausgestaltung von Vorteil, bei der im Bereich des Granulatreservoir eine oder mehrere Wiegezellen zum Erfassen des Gewichtes des enthaltenen Schüttgutes angeordnet ist oder dass die gesamte Einrichtung auf Wiegezellen bzw. einer Wiegevorrichtung zum Bestimmen des Gewichtes des eingefüllten Schüttgutes bzw. der Körner oder der gesamten Einrichtung angeordnet ist. Dadurch wird erreicht, dass die Masse an vereinzeltem und zugeführtem Schüttgut nach dem Loss-in-Weight Prinzip ermittelt werden kann und somit eine präzise Zuführung von Schüttgut nach Gewicht möglich ist. Des Weiteren kann damit das Nachfüllen von Schüttgut in das Granulatreservoir automatisiert werden. Beispielsweise ist eine Automatisierung des Nachfüllens von Schüttgut einfach möglich, da ein Mindest-Gewicht des Gerätes inklusive den Granulatreservoir oder des Granulatreservoir festlegbar ist, sodass nach Unterschreiten dieses Mindest-Gewichts ein Auffüllvorgang bis zu einem Soll-Gewicht erfolgt. Gleichzeitig ist damit sichergestellt, dass immer ausreichend Schüttgut im Granulatreservoir enthalten ist, da bei Unterschreiten und keinem Nachfüllen des Mindest-Gewichts eine Fehlermeldung ausgegeben wird und/oder die Anlage abgeschaltet wird. Diese Funktion kann auch mit einem kapazitiven Sensor gelöst werden. Daher ist wesentlichen die Relation von Korngewicht zu messen/ermitteln und für die Steuerung herzustellen.

Bei einer Ausbildung ist von Vorteil, dass im oberen Bereich, insbesondere im Kornaustragsbereich der Vereinzelungsscheibe ein Abblasstutzen angeordnet ist, der mit der Zuführvorrichtung, insbesondere eine Zuleitung, des vereinzelten Korns zur Spritzgussmaschine verbunden ist. Dadurch ist es möglich, dass für jeden Spritzgussvorgang exakt ein oder eine bestimmte Anzahl von Schüttgut, insbesondere Pellets oder Körner, zugeführt werden kann, wobei die Entnahme des Schüttguts immer einzeln erfolgt. Es ist aber auch möglich, dass der Abblasstutzen, insbesondere die Zuführleitung zur Spritzgussmaschine, mit einer Unterdruck- bzw. einem Vakuumsauger gekoppelt ist, sodass für eine schnellere und sichere Entnahme des Schüttgutes dieses zusätzlich eingesaugt wird. Auch ist es möglich, dass eine Druckförderung für den Transport des Kornes eingesetzt wird. Hierbei kann ein kontinuierlicher Betrieb der Unterdruck- bzw. Vakuumsauger bzw. der Druckförderung möglich sein, oder es kann bei jeder Entnahme eines Schüttgutes der Druck erhöht werden, also ein pulsierender Betrieb. Es ist aber auch möglich, dass das Korn nur durch die Schwerkraft ausgetragen und zugeführt wird, wobei hierzu der obere Bereich, insbesondere der Kornaustrittsbereich, drucklos ausgebildet ist.

Es ist aber auch eine Ausbildung von Vorteil, bei der im Kornaustragsbereich eine Überdrucköffnung angeordnet ist oder sich ein Abblasstutzen hinein erstreckt, wobei dieser vom Unterdruckbereich, insbesondere einer Unterdruckkammer getrennt ist. Dadurch wird erreicht, dass über die Überdrucköffnung die abgesaugte Luft aus dem Unterdruckbereich eingeblasen werden kann, sodass bei gegenüberliegender Öffnung der Vereinzelungsscheibe das daran angesaugte Schüttgut weggeblasen wird. Somit wird erreicht, dass mit einem Verdichter zwei Funktionen, nämlich das Ansaugen und das Wegblasen des Schüttgutes, insbesondere des vereinzelten Kornes, erreicht werden, sodass Energie eingespart werden kann. Die Position der Überdrucköffnung ist derart, dass beim Drehen der Vereinzelungsscheibe mit dem aufgenommenen Schüttgut deren Ansaugöffnungen korrespondierend an der Überdrucköffnung vorbeibewegt wird, sodass durch das Einblasen von Luft das Schüttgut sicher von der Vereinzelungsscheibe gelöst wird und eine sehr hohe Betriebssicherheit gewährleistet ist.

Vorteilhaft ist aber auch eine Ausbildung, bei der das Granulatreservoir, insbesondere der Kornaufnahmebereich, mit einer vorzugsweise automatischen Kunststoffgranulat-Zuführung verbunden ist. Damit wird erreicht, dass eine automatische Nachfüllung bei Unterschreiten eines voreinstellbaren Füllstandes des Schüttgutes möglich ist. Somit ist auch immer sichergestellt, dass das ausreichend Material im Gehäuse der Einrichtung vorhanden ist und somit die Ansauglöcher der Vereinzelungsscheiben ein Korn aufnehmen kann.

Eine Ausbildung ist von Vorteil, bei der die Vereinzelungsscheibe für das Schüttgut bzw. Korn einen Durchmesser von maximal 300mm aufweist. Dadurch wird erreicht, dass aufgrund des Durchmessers ein ausreichender Materialreservoir-Durchlauf zur besseren Kornaufnahme ermöglicht wird.

Es ist eine Ausbildung von Vorteil, bei der die Vereinzelungsscheibe im unteren Bereich, insbesondere in einem Kornaufnahmebereich, in das Granulatreservoir hineinragt bzw. angeordnet ist. Dadurch wird erreicht, dass die Ansauglöcher bzw. Ansaugbohrung immer mit Körner des Schüttguts bedeckt sind, sodass eine sichere Aufnahme an jeder Ansaugöffnung gewährleistet ist.

Schließlich ist eine Ausbildung von Vorteil, bei der der Vereinzelungsscheibe für die Schüttgutaufnahme, insbesondere unterhalb des Kornaustragsbereichs, ein Abdeckelement zum Verschließen einer oder mehrerer Ansaugöffnungen ohne Korn der Vorder- oder Rückseite der Vereinzelungsscheibe zugeordnet ist. Dadurch wird erreicht, dass bei jenen Ansaugöffnungen, die bereits das Korn abgegeben haben, jedoch noch nicht in das Granulatreservoir eingetaucht sind, das Einströmen von Luft erschwert bzw. verhindert wird.

Die Erfindung wird an Hand einer in mehrerer Zeichnungen dargestellten Ausführungsbeispiel näher erläutert, wobei die Erfindung nicht auf das dargestellte Ausführungsbeispiel beschränkt ist.

Es zeigen:
- Fig. 1: einen Schnitt durch die Einrichtung, in vereinfachter, schematischer Darstellung;
- Fig. 2: einen Schnitt durch ein weiteres Ausführungsbeispiel einer Einrichtung mit einem zusätzlichen Abdeckelement, in vereinfachter, schematischer Darstellung;
- Fig. 3: eine Vorderansicht der zusammengebauten Einrichtung, insbesondere nach Fig. 1 und 2, und einem Gehäuse für die Steuerung, Motoren, Verdichter usw. in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen

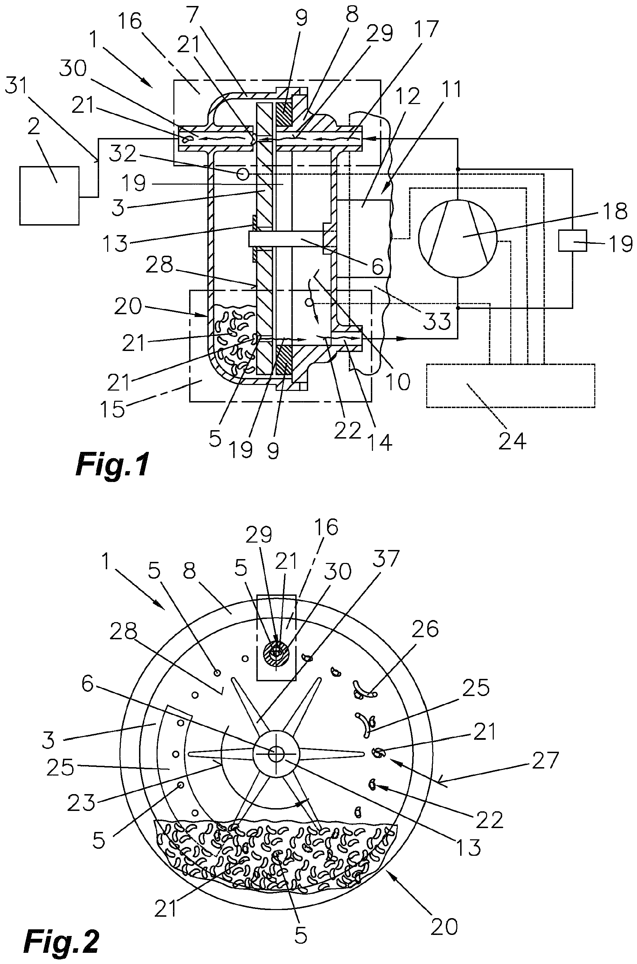

Grundsätzlich ist zu den Ausführungsbeispielen der Fig. 1 bis 3 zu erwähnen, dass vorzugsweise der Einsatz einer derartigen Einrichtung 1 zur Einkornzuführung an eine Spritzgussmaschine 2, also in der Spritzgusstechnik, Verwendung findet.

In den Fig. 1 bis 3 ist die Einrichtung 1, insbesondere ein Einzelkorn-Dosiergerät 1, zur Einkornzuführung an eine Verarbeitungsmaschine, insbesondere an eine Spritzgussmaschine 2, wie schematisch dargestellt, gezeigt.

Die Einrichtung 1 umfasst zumindest in der Basis eine Vereinzelungsvorrichtung, die aus einer Scheibe, insbesondere einer Vereinzelungsscheibe 3 gebildet wird. Die Vereinzelungsscheibe 3 ist über einen Teilkreis verteilt mit Ansaugöffnungen 5 versehen. Auf einer Welle 6 ist die Vereinzelungsscheibe 3 gelagert bzw. befestigt.

Bei den gezeigten Ausführungsbeispielen wird die Einrichtung aus zumindest zwei Gehäuseteilen 7,8 gebildet, die zueinander lösbar befestigt sind. Dabei bildet jedes Gehäuseteil 7,8 jeweils eine Aluminiumguss-Kammer bzw. Behälterkammer aus. Selbstverständlich ist es möglich, dass die Gehäuseteile 7,8 auch aus unterschiedlichen Materialien bestehen können.

Wesentlich ist beim Aufbau der Ausführungsvarianten, dass das zweite Gehäuseteil 8 eine Unterdruckkammer 10 ausbildet. Die nicht bewegliche Unterdruckkammer 10, insbesondere das zweite Gehäuseteil 8, dient gleichzeitig zur Lagerung einer Antriebseinheit 11, insbesondere von einem Stepper-Motor 12, der die vorzugsweise aus Edelstahl gebildete Vereinzelungsscheibe 3 direkt über die Welle 6 antreibt. Die Vereinzelungsscheibe 3 ist über ein Schnellverschraubsystem 13 form- oder kraftschlüssig mit der Welle 6, insbesondere der Motorantriebswelle, verbunden. Weiters weist die Unterdruckkammer 10 bzw. das zweite Gehäuseteil 8 noch zusätzlich einen Ansaugstutzen 14 auf. Vorzugsweise befindet sich dieser in einem Kornaufnahmebereich 15, der den unteren Bereich der Einrichtung 1 definiert und mit strich-punktierten Linien dargestellt ist. In weiterer Folge verfügt die Unterdruckkammer 10 bzw. das Gehäuseteil 8 auch über einen Kornaustragsbereich 16, wiederum strich-punktiert dargestellt, an dem sich ein Abblasstutzen 17 befindet, wobei der Abblasstutzen 17, insbesondere der Kornaustragsbereich 16, luftdicht getrennt vom Unterdruckbereich 10 im Kornaufnahmebereich 15 angeordnet ist.

Bevorzugt ist der Ansaugstutzen 14 mit einem Ansaugeingang einer Unterdruckerzeugungsvorrichtung, insbesondere eines Verdichter 18, und der Ausgang des Verdichters 18 bzw. der Unterdruckerzeugungsvorrichtung mit dem Abblasstutzen 17 verbunden. Damit wird erreicht, dass beispielsweise mit einem Verdichter 18 sowohl ein Unterdruck im Kornaufnahmebereich 15 als auch ein Überdruck in Kornabblasbereich 16 erzeugt wird. Selbstverständlich ist es jedoch auch möglich, dass zwei unterschiedliche Systeme für die beiden Bereiche eingesetzt werden können.

Der Unterdruckerzeuger 18 saugt dabei die Luft vom Gehäuse, insbesondere über die Druckkammer 10 ab, sodass im Bereich der Ansaugöffnungen 5 bzw. in der Druckkammer 10 Unterdruck gebildet wird und somit ständig Luft durch die Ansaugöffnungen 5 einströmt. Vorzugsweise ist die Vereinzelungsscheibe 3 mit ca. 40 kleinen Durchgangsbohrungen bzw. Ansaugöffnungen 5, insbesondere zwischen 0,5mm bis 5mm, auf einen kleineren Teilkreisdurchmesser gleichmäßig verteilt versehen. Selbstverständlich ist es möglich, dass mehr oder weniger Durchgangsbohrungen bzw. Ansaugöffnungen 5 angeordnet sein können. Für einen sicheren Betrieb der Einkornförderung ist im Bereich des Unterdruckerzeugers 18 ein Bypass-System 19, wie später noch erläutert, angeordnet, bei dem der Unterdruckerzeuger über die Bypass-Leitung ein Teilluftstrom immer Umgebungsluft ansaugt und abgibt. Das Bypass-System 19 ist vorzugsweise aus Blenden die den Volumenstrom definieren und ggf. einen Teilstrom als Umgebungsluft ansaugen gebildet.

Ein Granulatreservoir 20 für ein Schüttgut, insbesondere für einzelne Körner 21, vorzugsweise aus Kunststoff-Granulat oder Kunststoff-Pellets bzw. -Korn 21, ist im Kornaufnahmebereich 15 in dem ersten Gehäuseteil 7 angeordnet. Dabei ist das Granulatreservoir 20 stirnseitig, also auf der Oberfläche der Scheibe, an der Vereinzelungsscheibe 3 angeordnet, sodass das Korn 21, insbesondere das Schüttgut 21, direkt an der Vereinzelungsscheibe 3 anliegt. Wesentlich ist hierbei, dass zumindest ein vorzugsweise jedoch mehrere Ansaugöffnungen 5 an der Vereinzelungsscheibe 3 in das Granulatreservoir 20 eintauchen, sodass von den Ansaugöffnungen 5 entsprechend Körner 21 aufgenommen werden können.

Die Einrichtung 1, insbesondere das Einzelkorn-Dosiergerät 1, arbeitet derart, dass ein Unterdruck z.B. über den außerhalb liegenden Verdichter bzw. Unterdruckerzeuger 18 auf dem Ansaugstutzen 14 angelegt bzw. erzeugt wird, wodurch Luft bzw. Umgebungsluft 22 in der Unterdruckkammer 10 abgesaugt wird, wie schematisch mit Pfeilen angedeutet, und ein definierter Luftstrom im zweiten Gehäuseteil 8 erzeugt wird. Durch den anstehenden Unterdruck wird die Vereinzelungsscheibe 3 auf die Laufdichtung bzw. das Dichtelement 9 gepresst und über die Durchgangsbohrungen bzw. Ansaugöffnungen 5 auf der Vereinzelungsscheibe 3 strömt gleichmäßig Umgebungsluft 22 aus dem ersten Gehäuseteil 7 ein, d.h., dass die Umgebungsluft bzw. Luft 22 aus der Atmosphäre über das ersten Gehäuseteil 7 durch die Ansaugbohrungen 5 der Vereinzelungsscheibe 3 in die Unterdruckkammer 10 und von dieser über den Ansaugstutzen 14 von dem vorzugsweise externen Verdichter 18 angesaugt wird. Hierbei ist es möglich, dass in der Unterdruckkammer 10 ein Sensor angeordnet ist, der mit einer Steuerung 24 verbunden ist. Vorzugsweise wird die Druckregelung über ein Bypass-System 19 betrieben, bei dem der Verdichter 18 über die Bypass-Leitung einen Teilluftstrom immer Umgebungsluft ansaugt und abgibt.

Durch das Antreiben und Rotieren der Vereinzelungsscheibe 3 streift die Vereinzelungsscheibe 3 bzw. die darauf befindlichen Ansaugöffnungen 5 durch das Kunststoffgranulat bzw. Schüttgut 21 im Granulatreservoir 20 im Kornaufnahmebereich 15. Dabei sind die an der Vereinzelungsscheibe 3 angeordneten Ansaugöffnungen 5 so gewählt, dass jeweils bei einer Ansaugöffnung 5 vorzugsweise immer nur ein Korn 21, durch die einströmende Luft 22 angesaugt und aufgrund des anstehenden Unterdrucks auf der Vereinzelungsscheibe 3 aus der Unterdruckkammer 10 haften bleibt, d.h., dass die Vereinzelungsscheibe 3 möglichst luftdicht drehbar an dem Dichtelement 9 bzw. der Luftdichtung angeordnet ist, sodass ausreichend Luft 22 über die Ansaugöffnungen 5 eingesaugt wird. Je mehr Luft 22 angesaugt werden kann, desto höher ist die Haltekraft auf ein angesaugtes Korn 21 und somit auch der aufgebaute Unterdruck.

Durch die weitere Rotation, gemäß Pfeil 23, führt die Strecke über einzelne Kornabstreifer 25 und/oder Kornausrichter 26 zum Kornaustragsbereich 16. Die Kornabstreifer 25 und/oder Kornausrichter 26 haben die Aufgabe ev. an einem angesaugten Korn 21 bzw. anhaftendes Korn 21, wie schematisch in Fig. 2 durch einen Pfeil 27 gekennzeichnet, abzustreifen und/oder in eine bestimmte Lage auszurichten. Die Kornabstreifer 25 und/oder Kornausrichter 26 sind vorzugsweise federnd und/oder drehbar bzw. elastisch am Gehäuseteil 33 befestigt und streifen bzw. weisen einen geringen Abstand zu einer Stirnfläche 28 der ersten Vereinzelungsscheibe 3 auf. Auch ist es möglich, dass die Kornabstreifer 25 und/oder Kornausrichter 26 selbst aus federelastischem Material gebildet sind, die bei Verformung immer wieder in ihre Ausgangslage zurückkehren.

Wird an einem Verarbeitungsgerät, insbesondere der Spritzgussmaschine 2, ein Schüttgut 21 bzw. Korn 21 benötigt, so wird über die Antriebseinheit 12 die Vereinzelungsscheibe 3 derart weiterbewegt, dass ein von einer Ansaugbohrung 5 aufgenommenes Korn 21 gegenüber dem Abblasstutzen 17 positioniert ist, sodass dieses eine Korn 21 von der Ansaugöffnung 5 über den vom Verdichter 18 erzeugten Überdruck 29 weggedrückt bzw. weggeblasen wird. Dabei wird das Korn 21 in einen Ausgangsstutzen 30, der am Gehäuseteil 33 integriert bzw. angeordnet ist, aufgenommen. Von dort kann über eine Zuführvorrichtung, insbesondere durch eine entsprechende Zuleitung 31, an eine Verarbeitungs- bzw. Spritzgussmaschine 2 befördert wird. Der Abblasstutzen 17 dient prinzipiell zur Korn-Austragshilfe, wird aber auch zur Lochabreinigung von Kleinstteilen benutzt. Hierbei ist es möglich, dass von der Verarbeitungsmaschine 2, insbesondere deren Steuerung, beispielsweise über eine Busverbindung eine entsprechende Anforderung von benötigten Volumen an Material übersendet wird, worauf von der Steuerung 24 der Einrichtung 1 die benötigte Anzahl an Körner 21 ermittelt und an die Verarbeitungsmaschine 2 übersandt wird. Selbstverständlich kann auch die Anzahl an Körner 21 übermittelt werden oder aber es kann alles voreingestellt und in der Anlage gespeichert sein, sodass nur ein Anforderungssignal gesendet wird.

Grundsätzlich kann gesagt werden, dass der Durchsatz von einzelnen Körnern 21 über die definierte Dosierzeit ist und die daraus resultierende Rotationsgeschwindigkeit bzw. die Kornaustragsfrequenz, je nach Verarbeitungsanforderung, gewählt wird. Dabei ist es möglich, dass entsprechende Sensoren, insbesondere eine optische High-Speed-Detektion bzw. Sensor 32, eingesetzt werden kann, um die Ausfallssicherheit zu ermitteln und entsprechend entgegen zu regeln. Wenn keine optische High-Speed-Detektion, verbaut wird, muss eine Kalibrier-Funktion vorgesehen werden. Diese Kalibrier-Funktion ist dann notwendig, wenn die Anlage ohne Wiegezelle betrieben wird, Und über unterschiedliche Rotationsgeschwindigkeiten wird eine Ausfallssicherheit ermittelt. Zusätzlich wird über die Kalibrierung ein Korn zu Gewicht Relation für die weitere Dosierung hergestellt. Dafür wird ein Halbautomatikbetrieb mehrere Dosierproben bei unterschiedlichen Rotationsgeschwindigkeiten dosiert. Nach Eingabe der Dosiergewichte von den Proben des Schüttguts bzw. der Körner 21 wird einer Dosierkurve errechnet und dient automatisch zur physikalischen Anpassung der Dosierparameter, insbesondere der Rotationsgeschwindigkeit.

Ist ein optischer Sensor für die Korn-Detektierung verbaut, muss ebenso ein Bezug für das Verhältnis Korn 21 zu Gewicht der Steuerung 24 mitgeteilt werden. Die Ausfallsicherheit wird in diesem Fall optisch ausgewertet und kann sofort entsprechend den Dosierregelprozess beeinflussen und ggf. die Fehlmenge kompensieren.

Des Weiteren ist in Fig. 1 ein Gehäuse 33 in strichliert Linien dargestellt, an dem die Gehäuseteile 7,8 beispielsweise befestigt sind. Das Gehäuse 33 dient zur Aufnahme der zusätzlichen Komponenten, wie den Stepper-Motor 12, den Verdichter 18, Leitungen usw. Selbstverständlich ist es auch möglich, dass alle Komponenten in den Gehäuseteilen 7,8 integriert werden, sodass kein zusätzliches Gehäuse 33 benötigt wird.

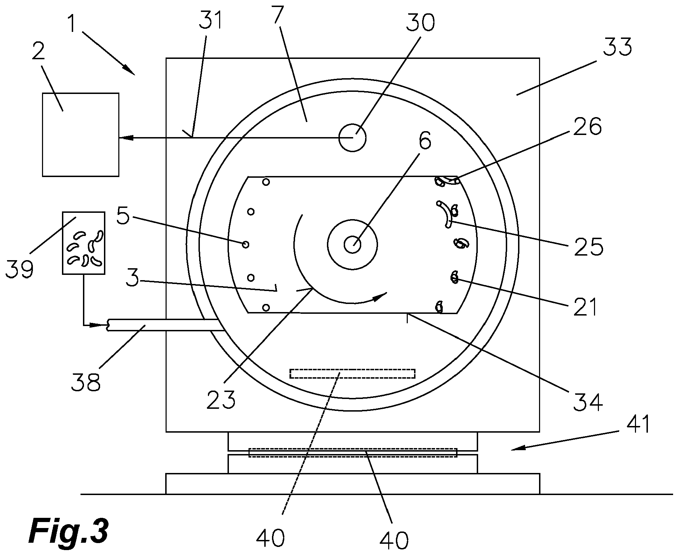

Die Position der Abblasstutzen 17 ist bei dem gezeigten Ausführungsbeispiel an der höchsten Stelle der Vereinzelungsscheibe 3 angeordnet, wobei sich diese auch zwischen diesem und dem maximalen Füllstand des Granulatreservoir 20 befinden kann. Dadurch ist mehr Platz für die Abstreifung anhaftender Körner 21 oder für die Ausrichtung der Körner 21 vorhanden. Beispielsweise ist es möglich, dass im vorderen Gehäuseteil 7 mit dem Granulatreservoir 20 vorzugsweise ein transparentes Sichtfenster 34, wie in Fig. 3 dargestellt, ausgebildet ist.

Wie ersichtlich und zuvor schon beschreiben, ragt die Vereinzelungsscheiben 3 im unteren Bereich, insbesondere in dem Kornaufnahmebereich 15, in dem das Granulatreservoir 20 angeordnet ist, in das Granulatreservoir 20, sodass die am Umkreis verteilt angeordneten Ansaugöffnungen 5 mit Körnern 21 umgeben sind und aufgrund des Unterdruckes diese angesaugt werden, d.h., dass gleichzeitig mehrere Ansaugöffnungen 5 im Granulatreservoir 20 angeordnet sind und mit den einzelnen Körner 21 Kontakt haben, sodass eine sichere Aufnahme eines Korn 21 an einer Ansaugöffnung 5 gewährleistet ist.

Dabei ist es auch möglich, dass an der Vereinzelungsscheibe 3 für die Schüttgutaufnahme, insbesondere unterhalb des Kornaustragsbereichs 16, ein auf der Vorderseite oder Rückseite der Vereinzelungsscheibe 3 angeordnetes Abdeckelement 35 zum Verschließen bzw. Abdecken einer oder mehreren Ansaugöffnungen 5. Dadurch wird erreicht, dass das Einströmen von Luft 22 in die offenen Ansaugöffnungen 5, also in denen kein Korn 21 mehr aufgenommen ist, minimiert bzw. verhindert wird. Das Abdeckelement 35 kann baulich auch durch die Gehäuseteile 7,8 oder des Dichtelementes 9 ersetzt bzw. gebildet werden.

Vorzugsweise weisen die Vereinzelungsscheibe 3 für das Korn 21 einen Durchmesser von 300mm auf. Auch ist es möglich, dass bei entsprechender Dimensionierung der Anlage größere Durchmesser, vorzugsweise zwischen 200mm und 1000mm oder mehr, der Vereinzelungsscheiben 3 eingesetzt werden können.

Damit die Körner 21 nicht aufeinander kleben bleiben oder durch den Abtransport eine Art Höhle im Granulatreservoir 20 entsteht, ist an der Vereinzelungsscheibe 3 für die Schüttgutaufnahme oder an der Welle 6 ein Rühr- bzw. Mitnehmerelement 37 bzw. Schaufelrad zum Durchmischen des Schüttgutes 21 bzw. der Körner 21 angeordnet. Damit wird erreicht, dass die Körner 21 durchmischt bzw. bewegt werden und sich somit keine granulatfreien Höhlen im Granulatreservoir 20 bilden.

Um ein Nachfüllen von Körner 21 in das im Gehäuseteil 7 angeordnete Granulatreservoir 20 zu ermöglichen, ist das Granulatreservoir 20, insbesondere der Kornaufnahmebereich 15, mit einer Kunststoffgranulat-Zuführung 38 (siehe Fig. 3) verbunden, d.h., dass bei Absinken der Füllmenge unter einen definierten Bereich bzw. definiertes Gewicht eine automatische Nachfüllung von Schüttgut 21 aus einem Vorratslager 39 auf einen maximalen oberen Bereich bzw. Gewicht erfolgt. Dabei ist es möglich, dass im Bereich des Granulatreservoirs 20 eine oder mehrere Wiegezellen 40 zum Erfassen des Gewichtes des enthaltenen Schüttgutes 21 angeordnet sind oder dass die gesamte Einrichtung 1 auf einer oder mehreren Wiegezellen 40 bzw. eine Wiegevorrichtung 41 mit der oder den Wiegezellen 40 (Fig. 3) zum Bestimmen des Gewichtes des eingefüllten Schüttgutes 21 bzw. Körner 21 angeordnet ist. Dies kann eine weitere Option, eine Gewichtsverlustmessung auch genannt "Loss-in-Weight-" Vermessung beim Granulat-Reservoir darstellen, D.h. die komplette Dosiereinheit 1 bzw. der Vorratsbehälter wird auf eine Gravimetrie verwogen und zur Relation Korn/Gewicht herangezogen.

Wie schematisch in den Ausführungsbeispielen dargestellt, sind die Kornabstreifer 25 und Kornausrichter 26 derart angeordnet, dass das angesaugte Korn 21 gegen ein Objekt, insbesondere eine Oberfläche oder Kante, läuft und das Korn 21 geringfügig in ihrer Position verschoben wird, wobei die Verschiebung jedoch so eingestellt wird, dass das Korn 21 nicht aus dem Umkreis der Ansaugöffnungen 5 hinausgedrückt wird. Dadurch wird erreicht, dass ev. am angesaugten Korn 21 haftende weitere Körner 21 abgestreift werden.

Auch ist es möglich, dass beispielsweise eine Ansaugöffnung 5 durch eine Gruppe kleinerer Öffnungen gebildet wird. Dies hat den Vorteil, dass bei sehr kleinem Korn 21 bzw. spezieller Kornform, diese nicht in die Ansaugöffnung 5 teilweise hineingesaugt werden, sodass es beim Abblasen zu ev. verhaken bzw. verkanten kommen kann. Dabei ist es auch möglich, dass die Ansaugöffnungen 5 mit entsprechenden Gittern (nicht dargestellt) versehen sind, sodass ebenfalls ein Einsaugen des Kornes 21 verhindert werden kann.

Die Vereinzelungsscheibe 3 liegt direkt an der Laufdichtung 9, insbesondere dem Dichtungselement 9, an, die wiederum an dem Gehäuseteil 8 befestigt, insbesondere aufgeklebt, ist. Somit wird über die Laufdichtung 9 eine leckagefreie Rotation der Vereinzelungsscheibe 3 und dem Gehäuseteil 8, wie in Fig. 1 gezeigt, sichergestellt.

Wie bereits aufgezeigt ist der gravierende Vorteil dieser Einrichtung, dass exakteste Dosierungen möglich sind, wodurch die Qualität immens erhöht wird und die Kosten für eine gegebenenfalls kompensierende Überdosierung einer ungenaueren Dosierung eingespart wird. In Ergänzung zu der in Rede stehenden Einrichtung 1 wird durch den Regelalgorithmus mit der Steuerung eine weitere Präzisierung der Dosierung im Einzelkornbereich erreicht.

Durch die Verwendung eines Schnellverschraubungssystems 13 wird erreicht, dass eine schnelle Anpassung der Vereinzelungsscheibe 3 an das Korn 21, insbesondere an die zu transportierenden Korngrößen vorgenommen werden kann, d.h., dass bei unterschiedlich großen Korn 21 unterschiedliche Vereinzelungsscheiben 3 mit entsprechenden Ansaugbohrungen 5 zum Einsatz kommen können, sodass bei einer Änderung des Schüttgutes 21 auch gleichzeitig die Vereinzelungsscheibe 3 geändert wird.

Der Ordnung halber wird darauf hingewiesen, dass die Erfindung nicht auf die dargestellten Ausführungsvarianten beschränkt ist, sondern auch weitere Ausbildungen beinhalten können.

## Patentansprüche

1. Einrichtung (1) zur Einkornzuführung an eine oder mehrere Verarbeitungsmaschinen, insbesondere Spritzgussmaschine (2), umfassend zumindest eine Vereinzelungsvorrichtung, ein Granulatreservoir (20) für ein Schüttgut (21) vorzugsweise aus Kunststoff-Granulat (21) oder Kunststoff-Pellets (21) bzw. -Korn (21) und einer Zuführvorrichtung des vereinzelten Schüttgutes (21) zur Spritzgussmaschine (2), wobei vorzugsweise zwei Gehäuseteile (7,8) um die Elemente, insbesondere die Vereinzelungsvorrichtung zur Bildung eines geschlossenen Gehäuses angeordnet sind, wobei die Vereinzelungsvorrichtung aus einer Vereinzelungsscheibe (3) gebildet ist, wobei die Vereinzelungsscheibe (3) mit über am Teilkreis verteilte Ansaugöffnungen (5) versehen ist, und auf einer Seite der Vereinzelungsscheibe (3) zur Aufnahme von Schüttgut (21) das Granulatreservoir (20), insbesondere im unteren Kornaufnahmebereich (15), angeordnet ist und auf der gegenüberliegenden Seite eine Unterdruckerzeugungsvorrichtung, insbesondere ein Verdichter (18) zum Erzeugen eines Unterdruckes in einer Unterdruckkammer (10) angeordnet bzw. verbunden ist, wobei die Vereinzelungsscheibe (3) auf einer Welle (6) gelagert und mit einer Antriebseinheit (11), insbesondere einem Stepper-Motor (12), gekoppelt ist und die Vereinzelungsscheibe (3) mit den Ansaugöffnungen (5) für die Korn-Aufnahme und Korn-Abgabe über die Welle (6) drehbar ist und als Abdichtung der rotierenden Vereinzelungsscheibe (3) ein Dichtelement (9) angeordnet ist, **dadurch gekennzeichnet dass** ein Kornabstreifer (25) und/oder ein Kornausrichter (26) für das Schüttgut bzw. Korn (21) zum Abstreifen der Körner (21) und/oder Ausrichten der Körner (21) angeordnet ist oder an der Vereinzelungsscheibe (3) für die Schüttgutaufnahme oder an der Welle (6) ein Rühr- bzw. Mitnehmerelement (37) angeordnet ist, wobei im Bereich des Granulatreservoir (20) eine oder mehrere Wiegezellen (40) zum Erfassen des Gewichtes des enthaltenen Schüttgutes (21) angeordnet ist oder dass die gesamte Einrichtung (1) auf Wiegezellen (40) bzw. einer Wiegevorrichtung (41) zum Bestimmen des Gewichtes des eingefüllten Schüttgutes bzw. der Körner (21) oder der gesamten Einrichtung (1) angeordnet ist.

2. Einrichtung (1) nach Anspruch 1, **dadurch gekennzeichnet, dass** im oberen Bereich, insbesondere im Kornaustragsbereich (16) der Vereinzelungsscheibe (3) ein Abblasstutzen (17) angeordnet ist, der mit der Zuführvorrichtung, insbesondere einer Zuleitung (31), des vereinzelten Korns (21) zur Spritzgussmaschine (2) verbunden ist.

3. Einrichtung (1) nach Anspruch 1 oder 2, **dadurch gekennzeichnet, dass** im Kornaustragsbereich (16) eine Überdrucköffnung angeordnet ist oder sich ein Abblasstutzen (17) hinein erstreckt, wobei dieser vom Unterdruckbereich, insbesondere einer Unterdruckkammer (10) getrennt sind.

4. Einrichtung (1) nach einem der vorhergehenden Ansprüche 1 bis 3, **dadurch gekennzeichnet, dass** das Granulatreservoir (20), insbesondere der Kornaufnahmebereich (15), mit einer vorzugsweise automatischen Kunststoffgranulat-Zuführung (38) verbunden ist.

5. Einrichtung (1) nach einem der vorhergehenden Ansprüche 1 bis 4, **dadurch gekennzeichnet, dass** die Vereinzelungsscheibe (3) für das Schüttgut (21) einen Durchmesser von maximal 300mm aufweist.

6. Einrichtung (1) nach einem der vorhergehenden Ansprüche 1 bis 5, **dadurch gekennzeichnet, dass** die Vereinzelungsscheibe (3) im unteren Bereich, insbesondere in einem Kornaufnahmebereich (15), in das Granulatreservoir (20) hineinragt bzw. angeordnet ist.

7. Einrichtung (1) nach einem der vorhergehenden Ansprüche 1 bis 6, **dadurch gekennzeichnet, dass** der Vereinzelungsscheibe (3) für die Schüttgutaufnahme, insbesondere unterhalb des Kornaustragsbereiches (16), ein Abdeckelement (35) zum Verschließen einer oder mehrerer Ansaugöffnungen (5) ohne Korn (21) der Vorder- oder Rückseite der Vereinzelungsscheibe (3) zugeordnet ist.

## Claims

1. Device (1) for feeding single grains to one or several processing machines, in particular an injection moulding machine (2), comprising at least a singulating device, a granulate reservoir (20) for a bulk material (21) preferably consisting of plastic granules (21) or plastic pellets (21) or grains (21), and a feeding device for the singulated bulk material (21) to the injection moulding machine (2), wherein preferably two housing parts (7,8) are arranged around the elements, in particular the singulating device, to form a closed housing, wherein the singulating device is formed by a singulating disk (3), wherein the singulating disk (3) is provided with suction openings (5) distributed over the pitch circle, and on one side of the singulating disk (3) for the intake of bulk material (21) the granulate reservoir (20) is arranged, in particular in the lower grain intake area (15), and on the opposite side a vacuum-generating device, in particular a compressor (18) for generating a vacuum in a vacuum chamber (10) is arranged or connected, respectively, wherein the singulating disc (3) is mounted on a shaft (6) and coupled to a drive unit (11), in particular a stepper motor (12), and the singulating disc (3) is rotatable with the suction openings (5) for grain intake and grain discharge via the shaft (6), and a sealing element (9) is arranged as a seal for the rotating singulating disc (3), **characterised in that** a grain stripper (25) and/or a grain aligner (26) for the bulk material or grain, respectively (21), is arranged for the purpose of stripping the bulk material (21) and/or aligning the grains (21), or an agitator or tappet element, respectively (37), is arranged on the singulating disk (3) for bulk intake or on the shaft (6), wherein one or several weighing cells (40) are arranged in the area of the granulate reservoir (20) for detecting the weight of the contained bulk material (21), or that the entire device (1) is arranged on weighing cells (40) or a weighing device (41) for determining the weight of the filled bulk material or the grains (21) or the entire device (1).

2. Device (1) according to claim 1, **characterised in that** a blow-off nozzle (17) is arranged in the upper area, in particular in the grain discharge area (16) of the singulating disc (3), which nozzle is connected to the feeding device, in particular a feed line (31), for the singulated grain (21) to the injection moulding machine (2).

3. Device (1) according to claim 1 or 2, **characterised in that** an overpressure opening is arranged in the grain discharge area (16) or a blow-off nozzle (17) extends into it, wherein this is separated from the vacuum section, in particular a vacuum chamber (10).

4. Device (1) according to one of the preceding claims 1 to 3, **characterised in that** the granulate reservoir (20), in particular the grain intake area (15), is connected to a preferably automatic plastic granules feed (38).

5. Device (1) according to one of the preceding claims 1 to 4, **characterised in that** the singulating disc (3) for the bulk material (21) has a maximum diameter of 300 mm.

6. Device (1) according to one of the preceding claims 1 to 5, **characterised in that** in the lower area, in particular in a grain intake area (15), the singulating disk (3) projects into or is arranged in, respectively, the granulate reservoir (20).

7. Device (1) according to one of the preceding claims 1 to 6, **characterised in that** a cover element (35) for closing one or several suction openings (5) without grain (21) of the front or rear side of the singulating disc (3) is assigned to the singulating disc (3) for bulk intake, in particular below the grain discharge area (16).

## Revendications

1. Dispositif (1) pour l'alimentation en substances monogranulaires sur une ou plusieurs machines de transformation, en particulier machine de moulage par injection (2), constitué au moins d'un dispositif de séparation, d'un réservoir à granulés (20) pour des produits en vrac (21), de préférence en granulés (21), pastilles (21) ou grains plastiques (21), et d'un dispositif d'alimentation des produits en vrac (21) séparés vers la machine de moulage par injection (2), deux pièces du boîtier (7,8) étant de préférence disposées autour des éléments, en particulier le dispositif de séparation, pour la constitution d'un boîtier fermé, le dispositif de séparation étant constitué d'un disque de séparation (3), le disque de séparation (3) comportant des orifices d'aspiration (5) répartis sur le cercle gradué, et disposé d'un côté du disque de séparation (3) pour l'admission des produits en vrac (21), le réservoir à granulés (20), en particulier dans la partie inférieure de l'admission du grain (15), et disposé ou relié sur la face opposée à un dispositif de génération de dépression, en particulier un compresseur (18) pour la génération d'une dépression dans une chambre à dépression (10), le disque de séparation (3) étant logé sur un arbre (6) et accouplé avec une unité d'entraînement (11), en particulier un moteur pas-à-pas (12), et le disque de séparation (3) avec les orifices d'aspiration (5) pour l'admission et la décharge du grain par le biais de l'arbre (6) est rotatif et un élément d'étanchéité (9) est disposé comme colmatage du disque de séparation (3) rotatif, **caractérisé en ce qu'**un racle à grain (25) et/ou un déflecteur à grain (26) est disposé pour les produits en vrac ou le grain (21) pour le raclage des grains (21) et/ou l'alignement des grains (21) ou un élément agitateur ou entraîneur (37) est disposé sur le disque de séparation (3) pour l'admission des produits en vrac ou sur l'arbre (6), une ou plusieurs cellules de pesée (40) étant disposées dans la zone du réservoir à granulés (20) pour la mesure du poids des produits en vrac (21) contenus ou que le dispositif complet (1) est disposé sur des cellules de pesée (40) ou sur un dispositif de pesée (41) pour la mesure du poids des produits en vrac ou grains (21) introduits ou du dispositif complet (1).

2. Dispositif (1) selon la revendication 1, **caractérisé en ce qu'**une tubulure de soufflage (17) est disposée dans la partie supérieure, en particulier la zone de sortie du grain (16), du disque de séparation (3), qui est relié au dispositif d'alimentation, en particulier à une conduite d'alimentation (31), du grain séparé (21) vers la machine de moulage par injection (2).

3. Dispositif (1) selon la revendication 1 ou 2, **caractérisé en ce qu'**un orifice de surpression est disposé dans la zone de sortie du grain (16) ou qu'une tubulure de soufflage (17) y pénètre, celle-ci étant toutefois séparée de la zone basse pression, en particulier d'une chambre à dépression (10).

4. Dispositif (1) selon l'une des revendications précédentes 1 à 3, **caractérisé en ce que** le réservoir à granulés (20), en particulier la zone d'admission du grain (15), est relié à un dispositif d'alimentation, de préférence automatique, en granulés plastiques (38).

5. Dispositif (1) selon l'une des revendications précédentes 1 à 4, **caractérisé en ce que** le disque de séparation (3) pour les produits en vrac (21) possède un diamètre maximal de 300 mm.

6. Dispositif (1) selon l'une des revendications précédentes 1 à 5, **caractérisé en ce que** le disque de séparation (3) dans la zone inférieure, en particulier une zone d'admission de grain (15), dépasse ou est disposé dans le réservoir à granulés (20).

7. Dispositif (1) selon l'une des revendications précédentes 1 à 6, **caractérisé en ce que** le disque de séparation (3) pour l'admission des produits en vrac, en particulier au-dessous de la zone de sortie du grain (16), est muni, sur la face avant ou arrière du disque de séparation (3), d'un élément de recouvrement (35) pour l'obturation d'un ou plusieurs orifices d'aspiration (5) sans grain (21).
